Europäisches Patentamt

European Patent Office

Office européen des brevets

(19)

(11) Publication number: 0 477 953 A2

# EUROPEAN PATENT APPLICATION

(12)

(21) Application number: 91116473.9

(22) Date of filing: 26.09.91

(51) Int. Cl.5: H02P 6/02

(30) Priority: 28.09.90 IT 4575790

(43) Date of publication of application:
01.04.92 Bulletin 92/14

(84) Designated Contracting States:
DE FR GB IT SE

(71) Applicant: ZELTRON - Istituto Zanussi per la
Ricerca S.p.A.
Via Principe di Udine 114
I-33030 Campoformido(Udine)(IT)

(72) Inventor: Bianchini, Gino
Via Piave 117
I-33170 Pordenone(IT)

(74) Representative: Patentanwälte Grünecker,
Kinkeldey, Stockmair & Partner
Maximilianstrasse 58
W-8000 München 22(DE)

(54) Control system for an electric DC motor.

(57) A control system for a DC motor comprises a power stage (12) and means (4,14,8,Q1) for controlling said power stage to energize phase windings (L1 - LN) of the motor in sequential succession.

According to the invention, said power stage (12) includes circuit branches each composed of one of said phase windings (L1-LN) in series connection with a controlled diode (S1-SN) and disposed parallel to each other for connection to the terminals of a DC power supply source (Vcc) on one side through a first controlled breaker element (Q1), and on the other side, through a second controlled breaker element (Q2). The power stage (12) further includes a first shunt diode (22) connected in parallel to the series-connection of said circuit branches and said second controlled breaker element (Q2), and a second shunt diode (23) connected in parallel to the series-connection of the circuit branches and said first controlled breaker element (Q1).

Fig.1

The present invention relates to a control system for electric DC motors, particularly motors of the brushless permanent-magnet type.

Already known are numerous control systems of the type defined above, which principally comprise: a power section directly interfaced with the motor for energizing the latter with the power required for obtaining the desired output; a synchronizing section acting to process the signals provenient from motor position sensors, and to generate corresponding synchronization signals for activating, by way of the power section, the various phases, or phase windings, of the motor. These control systems of course additionally include a low-voltage power section for energizing the various electronic circuits.

In the case for instance of three-phase low-voltage DC motors of the brushless type, it is common practice to employ a power section in the form of a bridge circuit comprising a branch for each phase of the motor. Each branch on its part comprises two controlled breaker elements (to be alternatingly actuated) and two diodes, and is connected at an intermediate point to a terminal of a respective phase of the motor, the phases of which are interconnected in a Y-connection.

As known, this solution provides for the flow of bidirectional currents in the phases of the motor, resulting in relatively high losses in the magnetic material of the motor, which therefore exhibits a reduced efficiency. It is moreover necessary to provide the control system with an undesirably complex control subsection including protection elements effective to avoid the short-circuiting of the power supply in case of contemporaneous conduction of the two breaker elements of any branch of the bridge.

For uses requiring a higher efficiency at limited costs, it is therefore preferred to employ motors capable of being energized by unidirectional currents, for instance permanent-magnet motors with a relatively high contra-electromotive force and a substantially trapezoidal wave shape.

The use of unidirectional currents simplifies the construction of the power converter, inasmuch as it permits the commutator elements to be connected in series with the phases of the motor to thereby avoid the danger of the energization section of the system supplying potentially harmful current peaks during the transition period of the commutation. This solution typically also provides the employ for each branch of the power supply bridge of two diodes and two breaker elements, the latter ones to be contemporaneously activated at the beginning of each period of conduction of the respective phase of the motor. During the period of conduction, the current can be controlled in various manners, for instance by maintaining it within a predetermined "hysteresis band" by corresponding commutation of one or both of the breaker elements, or by modifying the energizing voltage in a known manner. It is thus for instance known to use one of the breaker elements of each branch of the bridge for the commutation of the individual phases of the motor, and the other breaker element, for the regulation of the current.

At the end of the period of conduction of each phase, the breaker elements connected thereto are contemporaneously deactivatd, and all of the magnetic energy stored in the inductance of the respective phase (and not yet converted into mechanical work) is restituted to the power section in the form of a current flowing through the two diodes connected to the respective phase to result in a rapid discharge of the inductance.

In the described solutions, it is possible to employ various types of commutator components. In the case of low-power converters (up to 2 - 3 kW), for example, it is preferred to use field effect transistors (MOSFET), which are subject, however, to severe voltage limits, and inconvenient for higher power outputs due to conduction losses. For higher power outputs it is therefore preferred to employ commutator elements in the form of bipolar transistors (BJT) or insulated gate transistors (IGT). For particularly high power outputs (above 20 kW) and high voltages (above 1 kV), it is on the other hand preferred to employ gated thyristors (GTO), which are characterized by a considerable ruggedness.

In any case, in prior art control systems for electric motors, the reliability and cost of the components, particularly of the commutator elements, are of the greatest importance, and that specifically when the motor comprises four or more phases which may be necessary for obtaining particular performances for specific uses, for example for the operation of a compressor or a rotating drum in a laundry washer.

Numerous alternative solutions have already been proposed for reducing the number of commutator elements required for each phase of the motor, but these solutions have the drawback of highly complicated or unreliable operation, they may require the employ of additional passive components, or may result in a more complicated construction of the motor itself, resulting in increased costs.

For the control of a motor having N phases, it is thus for instance known to employ only $N+1$ transistors and $N+1$ shunt diodes. In particular, a first transistor is connected in common to one terminal of each phase and is employed for the regulation of the current, while the other transistors are connected in series to respective phases for the commutation thereof. On the other hand, one of the diodes is connected in parallel to the circuit branches comprising respective phases of the motor with the associated transistors, while each of the other diodes is connected between the central point of a respective circuit branch and the common current supply.

From a functional viewpoint, however, this solution is disadvantageous at high rotary speeds, as compared to control systems employing two breaker elements and two diodes for each phase. This is mainly due to the fact that the discharge of the above mentioned magnetic energy can not take place sufficiently rapidly for preventing the occurrence of braking effects in the motor, with resultant cumulative torque losses which may become inacceptable.

Another prior art alternative solution provides the employ of a capacitor connected for instance between the negative pole of the current supply and the cathodes of the diodes. For accelerating the discharge of the current in each individual phase, the diodes act to charge the capacitor to a voltage much higher than the voltage of the current supply (or the battery). The high voltage of the capacitor is maintained by the action of a commutation regulator connected to a step-down transformer acting to transfer excess energy from the capacitor to the main current supply.

This solution is also rather complicated and costly, inasmuch as it requires, for a motor haven N phases, $N+1$ breaker elements and $N+1$ diodes, in addition to a solenoid and a capacitor and a more sophisticated control circuitry.

It is therefore an object of the present invention to provide particularly simple, economic and reliable control system for DC motors capable of ensuring optimum functional characteristics.

This object is attained according to the present invention by a control system for DC motors embodying the characteristics as set forth in the appended claims.

The characteristics and advantages of the invention will become more clearly evident from the following description, given by way of example with reference to the accompaning drawings, wherein:

fig. 1  shows a circuit diagram of a control system according to a preferred embodiment of the invention, and

figs. 2 - 14  show graphic representations of the temporal correlations of respective significant signals processed by the circuit system of fig. 1.

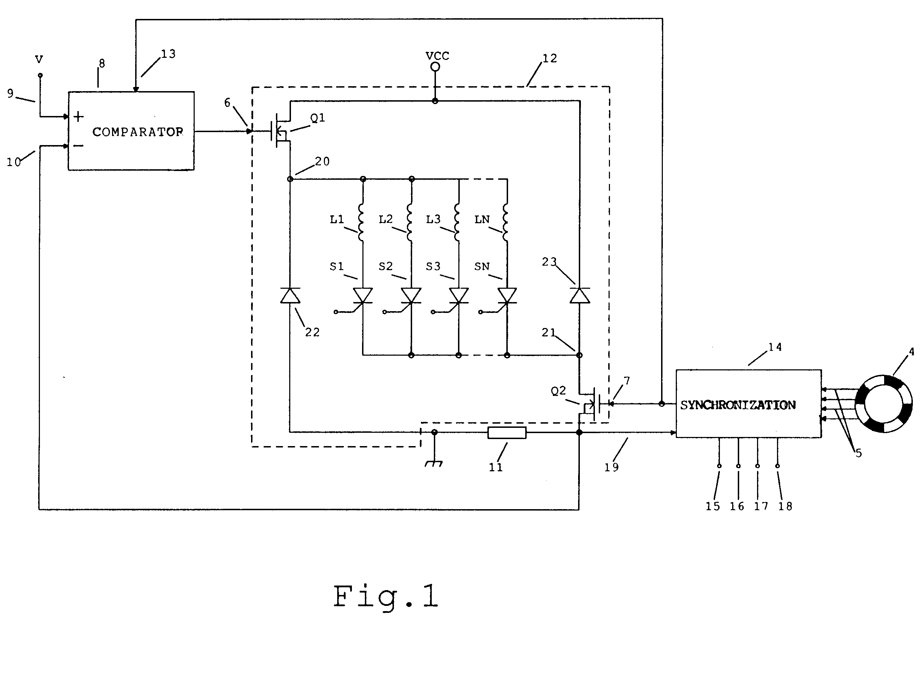

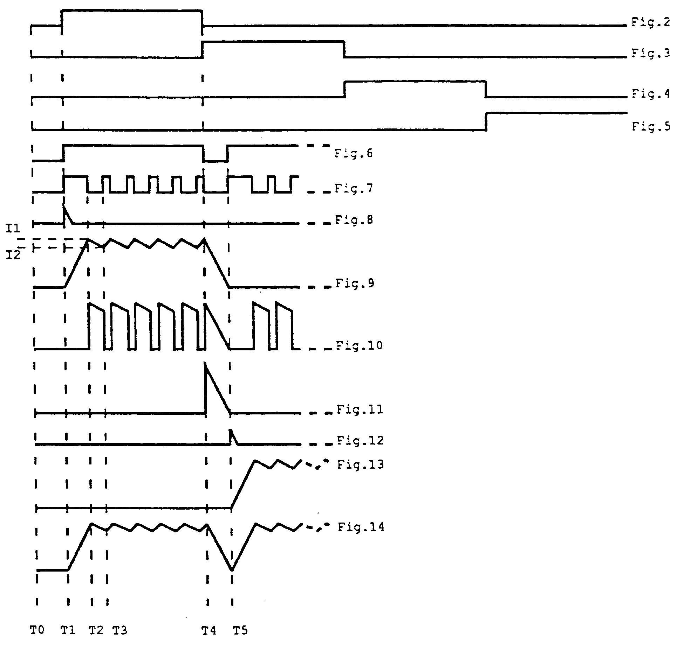

With reference to fig. 1 of the drawings, the illustrated control system is associated to a brushless DC electric motor operating at a relatively high voltage and having a number of N phase windings, or phases, indicated at L1, L2, L3 ... LN. For the sake of simplicity, the individual phases L1 - LN in the described example shall be assumed to be perfectly inductive.

The electric motor is provided with a position sensor diagrammatically indicated at 4 in fig. 1. Position sensor 4 may for instance be of the optical type, but is preferably a Hall effect sensor of the type Sprague UGN-3113U. In a known manner, sensor 4 is provided with a number of outputs 5 corresponding to the number of phases L1 - LN of the motor, and adapted to generate at said outputs respective square wave-shape signals as diagrammatically shown in figs. 2 to 5. In particular, these signals are phase-shifted relative to one another and correspond each to a respective phase of the motor for representing the relative angular position thereof.

The control system further includes a power section 12 connected to the terminals of a DC current source Vcc, for example a rectifyer circuit, and comprising two controlled breaker elements Q1 and Q2, preferably in the form of respective MOS (Metal Oxide Semiconductor) transistors, or of bipolar transistors, the control electrodes of which act as a first and a second control input 6 and 7, respectively, of power section 12. Breaker elements or transistors Q1 and Q2 may for instance be of the type Siemens BUZ 74.

Input 6 of power section 12 is connected to a corresponding output of a comparator circuit 8 comprising an input 9 to which a reference voltage V is applied, and a control input 10 connected to ground through a resistor 11. Comparator 8 is of the hysteresis type and may for instance comprise an integrated circuit National LM 303. Comparator 8 is adapted in the known manner to apply a control signal to input 6 of power section 12 until the voltage at its input 10 exceeds a first threshold value V1, whereupon the signal at the output of the comparator disappears. On the other hand, comparator 8 is adapted to resume the generation of said DC voltage signal at its output as soon as the voltage applied to its input 10 drops below a second threshold value V2 lower than V1. In any case, the voltage at the output of comparator 8 is Zero as long as an enable input 13 of the comparator does not have an enable signal applied thereto.

Input 7 of power section 12 and enable input 13 of comparator 8 are connected to a corresponding control output of a synchronization stage 14 itself controlled by the outputs 5 of position sensor 4. Synchronization stage 14 is of a known type and may for instance comprise integrated circuits SGS HCF40106B, HCF4011B and HCF4002B.

In particular, synchronization stage 14 is adapted to generate at its output 7 the above-mentioned enable signal (shown in fig. 6) for the periods of time intervening between the reduction to zero of the current flowing in the various phases (as will be explained in the following), and the succeeding drop flank of each of the square wave-shape signals appearing at outputs 5 of position sensor 4. Synchronization stage 14 also has a number of outputs 15 to 18 corresponding to the number of phases L1 - LN of the motor, and is adapted to generate thereat, in cyclic succession, respective pulse signals, when the voltage applied to a commutation input 19 of stage 14 drops below a predetermined threshold value, for instance value Zero. Commutation input 19 is connected to ground through voltage divider resistor 11.

According to an important aspect of the invention, each of phases L1 - LN of the motor is connected in series to a respective thyristor S1, S2, S3 ... SN, the control electrodes of which are to be understood to be connected to respective outputs 15 to 18 of synchronization stage 14. Thyristors S1 - SN may for instance of the type SGS-Thomson TXN 804.

The branches composed of phases L1 - LN and the respective thyristors S1 - SN are disposed in parallel to one another with one common terminal 20 connected to current source Vcc through breaker element or transistor Q1, and the opposite terminal 21 connected to ground through breaker element or transistor Q2 and resistor 11 in series therewith. First terminal 20 is in addition connected to ground through a first diode 22, while the second terminal 21 is connected to current source Vcc through a second diode 23.

Diodes 22 and 23 are polarized as illustrated in fig. 1 and may for instance be of the type Motorola 1N4936.

As regards the operation of the control system, let it be assumed that the motor is initially (instant T0) stopped, and that the signals produced by position sensor 4 (shown in figs. 2 - 5) are effective to cause synchronization stage 14 to call for the activation of phase L1 of the motor.

As the voltage at input 19 is Zero, synchronization stage 14 at instant T1 acts to generate at its output 7 the enable signal (fig.6) causing breaker element Q2 to close (transistor Q2 conductive) and enabling comparator 8 to activate breaker element or transistor Q1 with a control signal (shown in fig. 7) renering it conductive. At the same time, synchronization stage 14 generates a pulse signl (fig. 8) at its output 15 to thereby activate thyristor S1.

As a result, a current as represented in fig. 9 now flows through the circuit composed of breaker element Q1, phase L1 of the motor, thyristor S1, breaker element or transistor Q2, and resistor 11. This current flow rapidly increases up to an instant T2, at which it attains a value I1, as a result of which the voltage at the terminals of resistor 11 drops to a value corresponding to the first threshold value V1 of comparator 8. Output 6 of comparator 8 thereupon acts to deactivate first breaker element Q1, while second breaker element or transistor Q2 is maintained in its conductive state by output 7 of synchronization stage 14.

Since the voltage drop in each of the components Q1, S1, Q2 and 11 is negligible, the rise time of the current shown in fig. 9 during the period T1-T2 can substantially be expressed by the formula: $L \times I1/Vcc$, when the motor is at a standstill, L being representative of the inductance of phase L1. On the other hand, when the motor is rotating, the current rise time is expressed by the formula: $L \times I1/(Vcc-Efcem)$, wherein Efcem is the counter-electromotive force in series with phase L1 and in opposition to the supply voltage Vcc.

The deactivation of transistor Q1 at instant T2 automatically results in diode 22 becoming conductive since, as generally known, the current flowing in phase L1 cannot be abruptly interrupted, but has to continue its flow in the same direction. Under these conditions, the current thus flows through a circuit branch composed of diode 22, phase L1, thyristor S1, transistor Q2 and resistor 11. The inductance L of phase L1 is subjected to an inverse voltage equal to the sum of the voltage drops in components S1, Q2, 11 and 22, and the counter-electromotive force Efcem, which is proportional to the rotary speed of the motor. As a result, and as shown in fig. 9, the current diminishes linearly from the value I1 at a gradient proportional to the above mentioned inverse voltage. The wave shape of the current flowing through diode 22 is illustrated in fig. 10.

At an instant T3 the current has diminished to a value I2, in response to which there occurs a voltage drop corresponding to threshold value V2 of comparator 8 at the terminals of resistor 11. Comparator 8 therefore acts to reactivate transistor Q1, as a result of which the current flow rises again in the manner described and as shown in fig. 9.

For a certain period of time the function of the system proceeds as described, with an alternating succession of activations and deactivations of controlled breaker element Q1; for practical purposes, the current flowing through phase L1 of the motor remains substantially constant throughout the period of energization of this phase, inasmuch as the current flow fluctuates between the values I1 and I2 lying rather close to one another.

The above described operations refer to relatively low rotary speeds of the motor, at which the counter-electromotive force of the motor is very much smaller than the supply voltage Vcc. It will however be obvious to one skilled in the art that at high rotary speeds of the motor, transistor Q1 remains in its conductive state throughout the period of energization of phase L1. This is because the current flow exhibits a slow and steady rise in accordance with the rotary speed and the opposing torque of the motor, so that it does not attain the threshold value I1 of comparator 8.

In any case, at a certain instant T4 corresponding to the drop flank of the signal of fig. 2, the enable signal at output 7 of synchronization stage 14 drops to Zero, resulting in the simultaneous deactivation of transistors Q1 and Q2. Analogous to what has been explained above, this automatically causes a current to flow through diode 22 and diode 23 as illustrated in figs. 10 and 11, respectively. As a result, the circuit branch comprising phase L1 and thyristor S1 has applied thereto an inverse voltage equal to the value Vcc; the current flowing through this branch is therefore rapidly diminished (fig. 9), while the counter-electromotive force generated by the motor adds itself to the inverse voltage Vcc in phase therewith and in series with the phase winding L1.

At an instant T5 following upon the rise flank of the square wave-shape signal of fig. 3, the current flowing through power section 12 attains a value Zero.

The current drop time T3-T4 could approximately be expressed by the formula:

I(T4) x L/(Vcc + Efcem),

wherein I(T4) represents the strength of the current flowing through phase L1 at the instant T4.

At instant T5, the current drop to Zero results in a corresponding drop to Zero of the voltage at the terminals of resistor 11, and thus also at input 19 of synchronizer 14. This causes the latter to generate an enable signal (fig. 6) at its output 7 for activating the two transistors Q1 and Q2, and at the same time to generate a pulse signal (shown in fig. 12) at its output 16 for activating thyristor S2.

It is to be noted that at instant T5 thyristor S1 is automatically deactivated as a result of its being subjected to an inverse voltage equal to the sum of the supply voltage Vcc and the counter-electromotive force of the motor. Any danger of faulty switching operations, which might be detrimental to the entire system, is thus advantageously avoided.

Starting from instant T5, phase L2 of the motor is now energized in a similar manner as described above, resulting in a current flow therethrough as shown in fig. 13. As a result, the motor develops a torque proportional to the current flow in phases L1 and L2 and as shown in fig. 14.

The above described functions are of course performed in analogous manner for the remaining phases L3 ... LN in succession.

The above description clearly shows the simplicity and reliability of the control system according to the invention, with particular regard to power stage 12.

In particular, power stage 12 requires a very small number of active power control components which are moreover not required to have high performance characteristics in terms of commutation speeds. As a matter of fact, solely transistor Q1 is required to operate at high commutation speeds for the current regulating operation described above; all of the remaining active components may be of a slow-acting type of simple and low-cost construction.

For ensuring satisfactory functions of the system, the shunt diodes 22 and 23 should rather be of the fast-acting type, it being to be noted, however, that in contrast to prior art solutions, the present system requires only two such diodes, regardless of the number of phases of the motor.

A further advantage of the control system according to the invention results from the fact that the supply voltage Vcc can be variable between wide limits. This permits a considerable simplification of the power supply section (not shown) of power stage 12, inasmuch as it does not require any stabilization.

Furthermore, the employ of simple controlled diodes S1 - SN for the commutation of the phases L1 - LN of the motor, and the limited power required for their activation, permit the simplification of the auxiliary power supply (not shown for the sake of simplicity) associated to the system; the auxiliary power supply may in fact have a limited power output while still permitting a high functional efficiency to be obtained.

The control system according to the invention offers the still further advantage that the voltage stresses to which the major part of the components is subjected are limited to the supply voltage Vcc (380 V at maximum), resulting in improved reliability of the entire system. As a matter of fact, solely the controlled diodes S1 - SN have to sustain a higher inverse voltage, which attains its maximum at twice the supply voltage Vcc only when the motor operates at its maximum rotary speed; on the other hand, those skilled in the art are aware of the commercial availability of thyristors combining the ability of sustaining high operating voltages with excellent functional characteristics.

In summary, the control system according to the invention is of extremely simple construction and ensures a high degree of reliability at low cost.

The system described above by way of example may of course undergo numerous modifications without thereby leaving the purview of the invention.

The power stage 12 may thus for instance be used for controlling different electric consumers, for example electric step motors.

## Claims

1. A control system for a DC motor provided with a plurality of commutatable phase windings (L1 - LN), said system comprising synchronization means (14) controlled by position sensor means (4) associated to said motor for generating at a first output (7) enable signals allowing the motor to be energized through a power stage (12) during successive periods, and for generating at further outputs (15 - 18) respective control signals in synchronism with said enable signals for the cyclic energization of respective ones of said phases during respective ones of said successive periods, and further comprising comparator means (8) acting to control a first breaker element (Q1) in response to said enable signals for regulating the energizing current supplied to the motor at a predetermined mean value,

   characterized in that said power stage (12) is provided with a plurality of circuit branches each comprising one of said phase windings (L1 - LN) in series connection with a respective controlled diode (S1 - SN), said branches being disposed in parallel and connected to the terminals of a DC power supply source (Vcc) on one side (20) through said first controlled breaker element (Q1), and on the other side (21), through a second controlled breaker element (Q2) controlled by said enable signals, the control electrodes of said controlled diodes (S1 - SN) being controlled by respective ones of said further outputs (15 - 18) of said synchronization means (14), said power stage (12) further comprising a first shunt diode (22) connected in parallel to the series-connection of said circuit branches and said second controlled breaker element (Q2), and a second shunt diode (23) connected in parallel to the series-connection of said circuit branches and said first controlled breaker element (Q1).

2. A control system according to claim 1, characterized in that current detecting means (11) are connected in series with said circuit branches between said terminals of said DC power supply source (Vcc), and adapted to control a control input (10) of said comparator means (8) by generating a control signal in proportion to the current flow through said phase windings (L1 - LN) of the motor.

3. A control system according to claim 2, characterized in that said proportional control signal of said current detecting means (11) is applied to an input (19) of said synchronization means (14), the latter being adapted to generate one of said control signals at a successive one of said further outputs (15 - 18) in response to said proportional control signal diminishing to below a predetermined threshold value.

4. A power stage (12) for the energization of a plurality of commutatable consumers (L1 - LN), comprising a first controllable breaker element (Q1) controlled by current regulator means (8), characterized by further comprising a second controlled breaker element (Q2) controlled by enable signals allowing the energization of said consumers (L1 - LN) during successive periods, and a plurality of circuit branches each comprising one of said consumers in series with a respective controlled diode (S1 - SN), said circuit branches being disposed in parallel and connected to the terminals of a DC power supply source (Vcc), at one side (20) through said first controlled breaker element (Q1), and at the other side (21), through said second controlled breaker element (Q2), the control electrodes of said controlled diodes (S1 - SN) being each controlled by a respective control signal in synchronism with said enable signals for the cyclic energization of respective ones of said consumers (L1 - LN) during respective ones of said successive periods, said power stage (12) additionally comprising a first shunt diode (22) connected in parallel to the series connection of said circuit branches and said second controlled breaker element (Q2), and a second shunt diode (23) connected in parallel to the series-connection of said circuit branches and said first controlled breaker element (Q1).

Fig.1

EP 0 477 953 A2

Fig.2
Fig.3
Fig.4
Fig.5
Fig.6
Fig.7
Fig.8
Fig.9
Fig.10
Fig.11
Fig.12
Fig.13
Fig.14

I1
I2

T0  T1  T2 T3      T4  T5